# EUROPEAN PATENT SPECIFICATION

(11) **EP 4 502 004 B1**
(45) Date of publication and mention of the grant of the patent: **14.10.2026**
(21) Application number: 23775354.6
(22) Date of filing: 24.03.2023
(51) Int. Cl.: C08G 64/30, C08G 64/02

(54) **POLYCARBONATE COPOLYMER, METHOD FOR PREPARING SAME, AND COMPOSITION COMPRISING SAME**
POLYCARBONATCOPOLYMER, VERFAHREN ZUR HERSTELLUNG DAVON UND ZUSAMMENSETZUNG DAMIT
COPOLYMÈRE DE POLYCARBONATE, SON PROCÉDÉ DE PRÉPARATION ET COMPOSITION COMPRENANT CELUI-CI

(30) Priority: 25.03.2022 KR 20220037040
(43) Date of publication of application: 05.02.2025
(73) Proprietor: Hanwha Solutions Corporation, Jung-gu Seoul 04541 (KR)
(72) Inventor: LEE, Jin Seo, Seoul 04541 (KR); KIM, Do Kyoung, Seoul 04541 (KR); SEO, Do Hyun, Seoul 04541 (KR); JEONG, Min Jae, Seoul 04541 (KR); MOON, Seung Hwan, Seoul 04541 (KR)
(74) Representative: Berggren Oy
(86) International application number: PCT/KR2023/003952
(87) International publication number: WO 2023/182859

(56) References cited:
- WO-A1-2010/119574
- JP-A- 2009 102 536
- JP-A- 2015 006 890
- JP-A- 2017 031 346
- KR-A- 20140 145 160
- KR-A- 20220 022 714
- US-A1- 2016 075 823

## Description

The present invention relates to a polycarbonate copolymer, a method of preparing the same, and a composition comprising the same. More specifically, the present invention relates to a polycarbonate copolymer having good properties in terms of heat resistance, scratch resistance, formability, light resistance, weather resistance, transparency, mechanical strength, and the like, a method of preparing the same, and a composition comprising the same.

Polycarbonate is a thermoplastic polymer containing carbonate ester (-COO-) as a repeating unit in a main chain. Existing polycarbonates are mainly prepared through the reaction of bisphenol-A (BPA) and phosgene (COCl₂). While these polycarbonates exhibit excellent heat resistance, impact resistance, and flame retardancy, light resistance, transmittance, and scratch resistance are relatively poor.

In addition, since existing polycarbonates have an aromatic ring as a repeating structure, yellowing occurs due to sunlight including ultraviolet rays, and thus the light transmittance in some wavelength ranges is lowered and a polymer chain is broken, so that it is difficult to apply in fields requiring weather resistance.

Meanwhile, when BPA as a monomer remains in polycarbonate, it is known to act as an endocrine disruptor in vivo. Therefore, various regulations are being strengthened for using existing polycarbonates as products in contact with the human body, such as baby products, or medical products.

In addition, phosgene gas is a highly toxic substance subject to environmental regulations, and storage and management is difficult, requiring a separate cooling device to store the gas.

Therefore, there is a demand for a polycarbonate that overcomes the above disadvantages of existing polycarbonates and has good properties in terms of heat resistance, scratch resistance, formability, light resistance, weather resistance, transparency, mechanical strength, and the like.
US 2016/075823 A1 discloses a polycarbonate molded article.
JP 2015 006890 A discloses a heat-resistant container.
KR 2022 0022714 A discloses a polycarbonate composition.

It is one aspect of the present invention to provide a polycarbonate copolymer having good properties in terms of heat resistance, scratch resistance, formability, light resistance, weather resistance, transparency, mechanical strength, and the like.

It is another object of the present invention to provide a method of preparing the polycarbonate copolymer.

It is a further aspect of the present invention to provide a composition comprising the polycarbonate copolymer.

The above and other objects of the present invention can be achieved by embodiments of the present invention described below.

The subject matter of the present invention is characterized in the claims.
1. One aspect of the present invention relates to a polycarbonate copolymer. The polycarbonate copolymer is a polycarbonate copolymer including: a unit derived from at least one primary dihydroxyl compound; and units derived from at least two secondary dihydroxyl compounds, wherein the polycarbonate copolymer has a pencil hardness higher than H as measured according to a pencil hardness test (ISO 15184), and a glass transition temperature (Tg) of about 90 to about 160 °C as measured according to ISO 11357.

The polycarbonate copolymer includes about 1 to about 30 mol% of a unit derived from a secondary dihydroxyl compound represented by Formula 4b, based on the units derived from an entire dihydroxyl:

[Formula 4b] HO-R₄-R₅-R₆⁻OH

in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

The polycarbonate copolymer includes about 5 to about 45 mol% of units derived from a primary dihydroxyl compound; about 45 to about 85 mol% of a unit derived from a secondary dihydroxyl compound represented by Formula 4a; and about 1 to about 30 mol% of a unit derived from a secondary dihydroxyl compound represented by Formula 4b, based on the units derived from an entire dihydroxyl:

[Formula 4a] HO-R₇-OH

in Formula 4a, R₇ is a substituted or unsubstituted cycloalkylene group having 4 to 20 carbon atoms or a substituted or unsubstituted cycloalkoxylene group having 4 to 20 carbon atoms;

[Formula 4b] HO-R₄-R₅-R₆-OH

in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

2. One aspect of the present invention relates to a polycarbonate copolymer. The polycarbonate copolymer includes about 5 to about 45 mol% of at least one first repeating unit represented by Formula 1 below; and about 5 to about 95 mol% of at least two second repeating units represented by Formula 2 below:

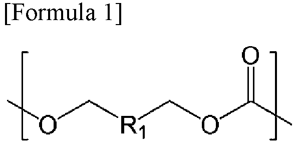

in Formula 1, R₁ is a single bond, a substituted or unsubstituted alkylene group having 1 to 20 carbon atoms, a substituted or unsubstituted alkoxylene group having 2 to 20 carbon atoms, a substituted or unsubstituted cycloalkylene group having 4 to 20 carbon atoms, or a substituted or unsubstituted cycloalkoxylene group having 4 to 20 carbon atoms;

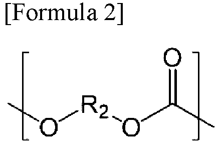

in Formula 2, R₂ is a substituted or unsubstituted cycloalkylene group having 4 to 20 carbon atoms or a substituted or unsubstituted cycloalkoxylene group having 4 to 20 carbon atoms.

The polycarbonate copolymer includes about 5 to about 45 mol% of the first repeating unit; about 45 to about 85 mol% of a second repeating unit represented by Formula 2a below; and about 1 to about 30 mol% of a second repeating unit represented by Formula 2b below:

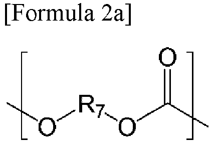

in Formula 2a, R₇ is a substituted or unsubstituted cycloalkylene group having 4 to 20 carbon atoms or a substituted or unsubstituted cycloalkoxylene group having 4 to 20 carbon atoms;

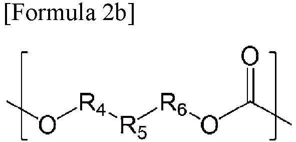

in Formula 2b, R₄ and R₆ are each independently a cycloalkylene group or a cycloalkoxylene group having 4 to 10 carbon atoms, and R₅ is a linear or branched alkylene group having 1 to 10 carbon atoms.

3. In the embodiment 2, the first repeating unit may be derived from a primary dihydroxyl compound including one or more of ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, 1,16-hexadecanediol, triethylene glycol, tetraethylene glycol, pentaethylene glycol, hexaethylene glycol, heptaethylene glycol, octaethylene glycol, nonaethylene glycol, decaethylene glycol, undecaethylene glycol, dodecaethylene glycol, 1,2-cyclohexanedimethanol, 1,3-cyclohexanedimethanol, 1,4-cyclohexanedimethanol, tricyclodecane dimethanol, pentacyclopentadecane dimethanol, decalindimethanol, tricyclotetradecane dimethanol, norbomandimethanol, adamantane dimethanol, 3,9-bis(1,1-dimethyl-2-hydroxyethyl)-2,4,8,10-tetraoxaspiro[5.5]undecane, and bicyclo[2.2.2]octane-2,3-dimethanol, and at least one carbonate diester compound.

4. In embodiment 2 or 3, the second repeating unit may be derived from a secondary dihydroxyl compound including two or more of 1,4:3,6-dianhydrohexitol, 1,2-cyclohexanediol, 1,3-cyclohexanediol, 1,4-cyclohexanediol, 2-methyl-1,4-cyclohexanediol, tricyclodecanediol, pentacyclopentadecanediol, decalindiol, tricyclotetradecanediol, norbonanediol, adamantanediol, 2,2-bis(4-hydroxycyclohexyl)propane, and 2,2,4,4-tetramethyl-1,3-cyclobutanediol, and at least one carbonate diester compound.

5. In any one of embodiments 2 to 4, the polycarbonate copolymer may further include a third repeating unit derived from at least one tertiary dihydroxyl compound and at least one carbonate diester compound.

6. In any one of embodiments 2 to 5, the polycarbonate copolymer may have a pencil hardness higher than H as measured according to a pencil hardness test (ISO 15184); and may have a glass transition temperature (Tg) of about 90 to about 160 °C at a transition point obtained when, in accordance with ISO 11357, 10 mg of the sample is maintained at 220 °C for 1 minute at a heating rate of 10 °C per minute and then cooled down at a cooling rate of 10 °C per minute, and the temperature is raised to 220 °C at the same heating rate.

7. In any one of embodiments 2 to 6, a solution in which 0.5 g of the sample is dissolved in a mixed solvent of 14.5 g of hexafluoroisopropanol and dichloromethane may have a dynamic viscosity of about 8.5 to about 16 mPa.s (about 8.5 to about 16 cps) as measured using a Brookfield dynamic viscometer at 25 °C.

8. Another aspect of the present invention relates to a method of preparing a polycarbonate copolymer. The preparation method includes melting a dihydroxyl compound including about 5 to about 45 mol% of at least one primary dihydroxyl compound represented by Formula 3 below and about 5 to about 95 mol% of at least two secondary dihydroxyl compounds represented by Formula 4 below, and at least one carbonate diester compound to obtain a melt; and performing polycondensation of the melt in the presence of a catalyst:

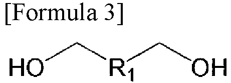

in Formula 3, R₁ is a single bond, a substituted or unsubstituted alkylene group having 1 to 20 carbon atoms, a substituted or unsubstituted alkoxylene group having 2 to 20 carbon atoms, a substituted or unsubstituted cycloalkylene group having 4 to 20 carbon atoms, or a substituted or unsubstituted cycloalkoxylene group having 4 to 20 carbon atoms;

[Formula 4] HO-R₂-OH

in Formula 4, R₂ is a substituted or unsubstituted cycloalkylene group having 4 to 20 carbon atoms or a substituted or unsubstituted cycloalkoxylene group having 4 to 20 carbon atoms.

The dihydroxyl compound includes about 5 to about 45 mol% of the primary dihydroxyl compound; about 45 to about 85 mol% of a secondary dihydroxyl compound represented by Formula 4a; and about 1 to about 30 mol% of a secondary dihydroxyl compound represented by Formula 4b:

[Formula 4a] HO-R₇-OH

in Formula 4a, R₇ is a substituted or unsubstituted cycloalkylene group having 4 to 20 carbon atoms or a substituted or unsubstituted cycloalkoxylene group having 4 to 20 carbon atoms;

[Formula 4b] HO-R₄-R₅-R₆-OH

in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

9. In the embodiment 8, the dihydroxyl compound may further include at least one tertiary dihydroxyl compound, and the tertiary dihydroxyl compound may include one or more of 1,1'-bis(4-hydroxyphenyl)-3,3,5-trimethylcyclohexane, bis(4-hydroxyphenyl)cyclohexane, and bis(4-hydroxyphenyl)cyclopentane.

10. In the embodiment 8 or 9, the carbonate diester compound may include one or more of diphenyl carbonate, ditolyl carbonate, dimethyl carbonate, diethyl carbonate, and di-t-butyl carbonate.

11. Still another aspect of the invention relates to a composition comprising a polycarbonate copolymer. The composition includes the polycarbonate copolymer according to any one of the embodiments 1 to 7.

The present invention provides a polycarbonate copolymer having good properties in terms of heat resistance, scratch resistance, formability, light resistance, weather resistance, transparency, mechanical strength, and the like, a method of preparing the same, and a composition comprising the same.

Hereinafter, the present invention will be described in detail.

In the present specification, "a to b" representing a numerical range is defined as "≥a and ≤b."

The polycarbonate copolymer according to one embodiment of the present invention is prepared from three or more types of dihydroxyl compound monomers having few or preferably no aromatic ring structures, double bonds, or triple bonds excluding bisphenol-A which hinders eco-friendliness.

The polycarbonate copolymer according to one embodiment of the present invention includes a unit derived from at least one primary dihydroxyl compound; and units derived from at least two secondary dihydroxyl compounds, wherein the polycarbonate copolymer may have a pencil hardness higher than H as measured according to a pencil hardness test (ISO 15184) and a glass transition temperature (Tg) of about 90 to about 160 °C as measured according to ISO 11357.

The polycarbonate copolymer includes about 1 to about 30 mol% of a unit derived from a secondary dihydroxyl compound represented by Formula 4b, based on the units derived from an entire dihydroxyl.

[Formula 4b] HO-R₄-R₅-R₆⁻OH

in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

The polycarbonate copolymer includes about 5 to about 45 mol% of units derived from a primary dihydroxyl compound; about 45 to about 85 mol% of a unit derived from a secondary dihydroxyl compound represented by Formula 4a; and about 1 to about 30 mol% of a unit derived from a secondary dihydroxyl compound represented by Formula 4b, based on the units derived from an entire dihydroxyl.

[Formula 4a] HO-R₇-OH

in Formula 4a, R₇ is a substituted or unsubstituted cycloalkylene group having 4 to 20 carbon atoms or a substituted or unsubstituted cycloalkoxylene group having 4 to 20 carbon atoms;

[Formula 4b] HO-R₄-R₅-R₆⁻OH

in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

In an embodiment, a molar ratio of the secondary dihydroxyl compound represented by Formula 4a and the secondary dihydroxyl compound represented by Formula 4b may be about 2:1 to about 8.5:1, for example about 5:1 to about 8.2:1, specifically about 6:1 to about 8:1.

In an embodiment, the primary dihydroxyl compound may be included in an amount of about 8 to about 40 mol%, specifically about 10 to about 35 mol%, based on 100 mol% of an entire dihydroxyl compound.

In an embodiment, a molar ratio of the primary dihydroxyl compound (primary dihydroxyl compound represented by Formula 3 below) and the secondary dihydroxyl compound represented by Formula 4a may be about 1:1.2 to about 1:8.

In an embodiment, a content of the primary dihydroxyl compound (primary dihydroxyl compound represented by Formula 3 below) and the secondary dihydroxyl compound represented by Formula 4b may satisfy Expression 1 below.

[Expression 1] 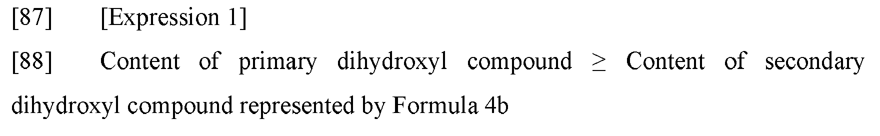 Content of primary dihydroxyl compound ≥ Content of secondary dihydroxyl compound represented by Formula 4b

In addition, the polycarbonate copolymer according to one embodiment of the present invention includes at least one first repeating unit represented by Formula 1 below; and at least two second repeating units represented by Formula 2 below: 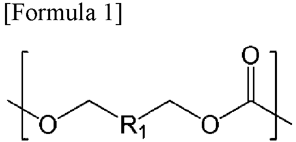 in Formula 1, R₁ is a single bond, a substituted or unsubstituted alkylene group having 1 to 20 carbon atoms, a substituted or unsubstituted alkoxylene group having 2 to 20 carbon atoms, a substituted or unsubstituted cycloalkylene group having 4 to 20 carbon atoms, or a substituted or unsubstituted cycloalkoxylene group having 4 to 20 carbon atoms.

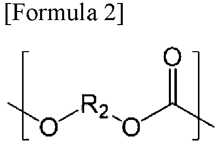

in Formula 2, R₂ is a substituted or unsubstituted cycloalkylene group having 4 to 20 carbon atoms or a substituted or unsubstituted cycloalkoxylene group having 4 to 20 carbon atoms.

Here, the "substitution" means that a hydrogen atom is substituted with an alkyl group having 1 to 10 carbon atoms, a halogen atom, a nitro group, a cyano group, a hydroxyl group, an amino group, a cycloalkyl group having 3 to 10 carbon atoms, a heterocycloalkyl group having 3 to 10 carbon atoms, or combinations thereof.

In addition, the "alkyl," "alkoxy" and other substituents including the "alkyl" moiety include both straight- or branched-chain forms, and the "cycloalkyl" includes all polycyclic ring structural forms such as a saturated monocyclic or saturated bicyclic having 4 to 20 carbon atoms.

The polycarbonate copolymer according to an aspect has about 5 to about 45 mol% of the first repeating unit and about 5 to about 95 mol% of the second repeating unit based on 100 mol% of an entire repeating unit. Within the above range, the polycarbonate copolymer may have excellent heat resistance, scratch resistance, formability, light resistance, weather resistance, transparency, mechanical strength, and the like.

The polycarbonate copolymer according to an aspect includes about 5 to about 45 mol% of the first repeating unit; about 45 to about 85 mol% of a second repeating unit represented by Formula 2a below; and about 1 to about 30 mol% of a second repeating unit represented by Formula 2b below.

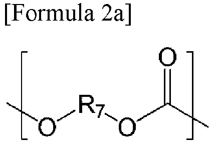

in Formula 2a, R₇ is a substituted or unsubstituted cycloalkylene group having 4 to 20 carbon atoms or a substituted or unsubstituted cycloalkoxylene group having 4 to 20 carbon atoms.

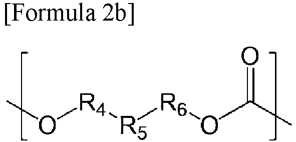

in Formula 2b, R₄ and R₆ are each independently a cycloalkylene group or a cycloalkoxylene group having 4 to 10 carbon atoms, and R₅ is a linear or branched alkylene group having 1 to 10 carbon atoms.

In an embodiment, the first repeating unit may be derived from a primary dihydroxyl compound including one or more of ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, 1,16-hexadecanediol, triethylene glycol, tetraethylene glycol, pentaethylene glycol, hexaethylene glycol, heptaethylene glycol, octaethylene glycol, nonaethylene glycol, decaethylene glycol, undecaethylene glycol, dodecaethylene glycol, 1,2-cyclohexanedimethanol, 1,3-cyclohexanedimethanol, 1,4-cyclohexanedimethanol, tricyclodecane dimethanol, pentacyclopentadecane dimethanol, decalindimethanol, tricyclotetradecane dimethanol, norbomandimethanol, adamantane dimethanol, 3,9-bis(1,1-dimethyl-2-hydroxyethyl)-2,4,8,10-tetraoxaspiro[5.5]undecane, and bicyclo[2.2.2]octane-2,3-dimethanol, and at least one carbonate diester compound, but is not limited thereto.

In an embodiment, the second repeating unit may be derived from a secondary dihydroxyl compound including two or more of 1,4:3,6-dianhydrohexitol, 1,2-cyclohexanediol, 1,3-cyclohexanediol, 1,4-cyclohexanediol, 2-methyl-1,4-cyclohexanediol, tricyclodecanediol, pentacyclopentadecanediol, decalindiol, tricyclotetradecanediol, norbonanediol, adamantanediol, 2,2-bis(4-hydroxycyclohexyl)propane, and 2,2,4,4-tetramethyl-1,3-cyclobutanediol, and at least one carbonate diester compound, but is not limited thereto.

In an embodiment, the secondary dihydroxyl compound may include 1,4:3,6-dianhydrohexitol, 2,2-bis(4-hydroxycyclohexyl)propane, and/or 2,2,4,4-tetramethyl-1,3-cyclobutanediol, and the like. Here, 1,4:3,6-dianhydrohexitol may be isomannide, isosorbide and/or isoidide, preferably isosorbide.

In an embodiment, a molar ratio of the repeating unit represented by Formula 2a and the repeating unit represented by Formula 2b is about 2:1 to about 8.5:1, for example, about 5:1 to about 8.2:1, specifically about 6:1 to about 8:1, but is not limited thereto.

In an embodiment, the polycarbonate copolymer may further include a third repeating unit derived from at least one tertiary dihydroxyl compound and at least one carbonate diester compound.

In an embodiment, the tertiary dihydroxyl compound may include 1,1'-bis(4-hydroxyphenyl)-3,3,5-trimethylcyclohexane, bis(4-hydroxyphenyl)cyclohexane, bis(4-hydroxyphenyl)cyclopentane, and combinations thereof.

In an embodiment, a content of the third repeating unit may be 0 to about 20 mol% based on 100 mol% of a total of the first repeating unit, the second repeating unit, and the third repeating unit. When the third repeating unit is included, the polycarbonate copolymer may have better heat resistance.

In an embodiment, the polycarbonate copolymer may have pencil hardness higher than H as measured according to a pencil hardness test (ISO 15184).

In an embodiment, the polycarbonate copolymer may have a glass transition temperature (Tg) of about 90 to about 160 °C, for example about 100 to about 155 °C at a transition point obtained when, in accordance with ISO 11357, 10 mg of the sample is maintained at 220 °C for 1 minute at a temperature increase rate of 10 °C per minute and then cooled at a cooling rate of 10 °C per minute, and the temperature is raised to 220 °C at the same temperature increase rate.

In an embodiment, a solution in which 0.5 g of the sample is dissolved in a mixed solvent of 14.5 g of hexafluoroisopropanol and dichloromethane may have a dynamic viscosity of about 8.5 mPa.s to about 16 mPa.s (about 8.5 to about 16 cps), for example about 9 to about 12 mPa.s (about 9 to about 12 cps) as measured using a Brookfield dynamic viscometer at 25 °C.

As described above, polycarbonate copolymers of the present invention are multicomponent copolymers obtained by necessarily copolymerizing the primary dihydroxyl compound and the secondary dihydroxyl compounds as the dihydroxyl compounds, wherein the polycarbonate copolymer can solve brittleness problem in the case of applying only secondary dihydroxyl compounds, and can improve heat resistance and scratch resistance at the same time.

Polycarbonate according to one embodiment of the present invention may be prepared by a preparation method including: (1) melting a dihydroxyl compound including about 5 to about 45 mol% of at least one primary dihydroxyl compound represented by Formula 3 below and about 5 to about 95 mol% of at least two secondary dihydroxyl compounds represented by Formula 4 below, and at least one carbonate diester compound to obtain a melt; and (2) performing polycondensation of the melt in the presence of a catalyst.

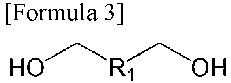

in Formula 3, R₁ is a single bond, a substituted or unsubstituted alkylene group having 1 to 20 carbon atoms, a substituted or unsubstituted alkoxylene group having 2 to 20 carbon atoms, a substituted or unsubstituted cycloalkylene group having 4 to 20 carbon atoms, or a substituted or unsubstituted cycloalkoxylene group having 4 to 20 carbon atoms;

[Formula 4] HO-R₂-OH

in Formula 4, R₂ is a substituted or unsubstituted cycloalkylene group having 4 to 20 carbon atoms or a substituted or unsubstituted cycloalkoxylene group having 4 to 20 carbon atoms.

### Step (1)

In step (1), a dihydroxyl compound including at least one primary dihydroxyl compounds and at least two secondary dihydroxyl compounds; and at least one carbonate diester compound are melted.

The dihydroxyl compound includes about 5 to about 45 mol% of the primary dihydroxyl compound; about 45 to about 85 mol% of a secondary dihydroxyl compound represented by Formula 4a; and about 1 to about 30 mol% of a secondary dihydroxyl compound represented by Formula 4b.

[Formula 4a] HO-R₇-OH

in Formula 4a, R₇ is a substituted or unsubstituted cycloalkylene group having 4 to 20 carbon atoms or a substituted or unsubstituted cycloalkoxylene group having 4 to 20 carbon atoms;

[Formula 4b] HO-R₄-R₅-R₅-OH

in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

In an embodiment, the dihydroxyl compound may further include the tertiary dihydroxyl compound in addition to the primary dihydroxyl compound and the secondary dihydroxyl compound.

In an embodiment, the carbonate diester compound may be a compound represented by Formula 5 below.

[Formula 5] A-O-CO-O-A'

in Formula 5, A and A' are each independently a substituted or unsubstituted alkyl group having 1 to 18 carbon atoms or a substituted or unsubstituted aryl group having 1 to 18 carbon atoms.

In an embodiment, the carbonate diester compound may include one or more of diphenyl carbonate, ditolyl carbonate, dimethyl carbonate, diethyl carbonate, and di-t-butyl carbonate, but is not particularly limited thereto. Preferably, the carbonate diester compound may be diphenyl carbonate.

In an embodiment, a content of the carbonate diester compound may be about 0.9 to about 1.1 moles based on about 1 mole of the dihydroxyl compound. Within the above range, the polycarbonate copolymer may have excellent heat resistance, scratch resistance, formability, light resistance, weather resistance, transparency, mechanical strength, and the like.

In an embodiment, the above-mentioned compounds may be melted at a temperature of about 150 to about 250 °C, but the temperature range is not particularly limited as long as these compounds can be sufficiently melted.

### Step (2)

In the above step (2), the melt obtained in step (1) is subjected to polycondensation in the presence of a catalyst.

In an embodiment, the catalyst may include an alkali metal catalyst, an alkaline earth metal catalyst, or a mixture thereof.

In an embodiment, the alkali metal catalyst may include one or more of lithium hydroxide (LiOH), sodium hydroxide (NaOH), potassium hydroxide (KOH), cesium hydroxide (CsOH), lithium carbonate (Li₂CO₃), sodium carbonate (Na₂CO₃), potassium carbonate (K₂CO₃), cesium carbonate (Cs₂CO₃), lithium acetate (LiOAc), sodium acetate (NaOAc), potassium acetate (KOAc), and cesium acetate (CsOAc), but is not particularly limited thereto.

In an embodiment, the alkaline earth metal catalyst may include one or more of calcium hydroxide (Ca(OH)₂), barium hydroxide (Ba(OH)₂), magnesium hydroxide (Mg(OH)₂), strontium hydroxide (Sr(OH)₂), calcium carbonate (CaCO₃), barium carbonate (BaCO₃), magnesium carbonate (MgCO₃), strontium carbonate (SrCO₃), calcium acetate (Ca(OAc)₂), barium acetate (Ba(OAc)₂), magnesium acetate (Mg(OAc)₂), and strontium acetate (Sr(OAc)₂), but is not particularly limited thereto.

In an embodiment, a content of the catalyst may be about 50 to about 2,000 ppm based on about 1 mole of an entire dihydroxyl compound. Within the above range, the polycarbonate copolymer may have excellent heat resistance, scratch resistance, formability, light resistance, weather resistance, transparency, mechanical strength, and the like.

Meanwhile, the alkali metal and/or alkaline earth metal catalyst may be used together with a base catalyst such as base ammonium or amine, a base phosphorus, or base boron compound, and the base catalyst may be used alone or in combination, and an amount used is not particularly limited.

In addition, during melt polycondensation, additives such as an antioxidant and a heat stabilizer may be added, if necessary.

In an embodiment, examples of the antioxidant and the heat stabilizer may include hindered phenol, hydroquinone, phosphite, and substituted compounds thereof.

In an embodiment, the polycondensation may include (2-1) performing a primary reaction at a pressure of about 0.5 to about 5.0 bar and a temperature of about 150 to about 250 °C for about 0.5 to about 5.0 hours; and (2-2) performing a secondary reaction at a pressure of about 0.001 to about 0.5 bar and a temperature of about 190 to about 250 °C for about 0.5 to about 5.0 hours. After sufficiently reacting the dihydroxyl compound and the carbonate diester compound through the reaction in step 2-1, a conversion rate of monomers can be increased and copolymers having a higher molecular weight can be synthesized, by proceeding with the reaction in step 2-2. In particular, when an initial reaction temperature is high, it is preferable to perform the reaction in two steps because thermal decomposition of monomers and polymers may be accelerated.

The composition according to one embodiment of the present invention includes the polycarbonate copolymer. For example, it may be prepared as a composition further including additional resin components or additives in addition to the polycarbonate copolymer.

In an embodiment, the additive may include an antioxidant, a heat stabilizer, a light absorber, a color former, a lubricant, a colorant, a conductive agent, a nucleation agent, a flame retardant, a plasticizer, an antistatic agent, and combinations thereof, but is not limited thereto.

In an embodiment, the antioxidant and the heat stabilizer may be the same as or different from those described in the method of preparing the polycarbonate copolymer.

In an embodiment, resorcinol, salicylate, and the like may be used as a light absorber.

In an embodiment, phosphite, hydrophosphite, and the like may be used as the color former.

In an embodiment, a montanic acid, a stearyl alcohol, and the like may be used as the lubricant.

In an embodiment, dyes and pigments may be used as the colorant.

In an embodiment, carbon black or the like may be used as the conductive agent or the nucleation agent.

Here, a type and amount of the additives are not particularly limited as long as they do not impair physical properties, particularly transparency, of the prepared polycarbonate copolymer.

In an embodiment, there is no particular limitation on the method of preparing a polycarbonate copolymer composition, and a method of preparing a polycarbonate composition known in the art to which the present invention belongs may be used as it is or modified appropriately, and the above-described resin components and additives may be freely selected and mixed in a desired order without any particular order restriction. For example, each of the above-mentioned resins and additives is melted and extruded in a required amount at a temperature of about 160 to about 270 °C using a single-screw and/or twin-screw extruder to prepare a polycarbonate copolymer composition in a pellet form.

A molded article may be formed from the polycarbonate copolymer; or the composition comprising the polycarbonate copolymer. There is no particular limitation on the method of manufacturing the molded article, and a method known in the art to which the present invention belongs may be used. For example, the molded article may be manufactured by molding the polycarbonate copolymer or the composition comprising the polycarbonate copolymer by a conventional method such as injection molding, extrusion molding, casting molding, blow molding, rotational molding, film molding, and the like.

The molded article may be formed from the polycarbonate copolymer or the composition comprising the same, and may have excellent heat resistance, scratch resistance, formability, light resistance, weather resistance, transparency, mechanical strength, and the like. Accordingly, the molded article can be used as medical products, daily supplies, food containers, baby products, automobile interior and exterior materials, electronic product exterior materials, optical materials, glass substitute materials, solar energy materials, mobile phone materials, smart watch materials, safety products, industrial materials, 3D printing materials, building materials, cosmetic containers, and the like.

Hereinafter, the present invention will be described in more detail through examples, but these examples are only for the purpose of explanation and should not be construed as limiting the present invention.

### Examples

### Example 1

A dihydroxyl compound including 10 mol% of 1,4-butanediol as a primary dihydroxyl compound and 80 mol% of isosorbide and 10 mol% of 2,2-bis(4-hydroxycyclohexyl)propane as secondary dihydroxyl compounds, and 1 mole of diphenyl carbonate as a carbonate diester compound based on 1 mole of the total amount of the dihydroxyl compound were filled in a reactor equipped with an agitator, 500 ppm of Na₂CO₃ (based on 1 mole of total dihydroxyl compounds) as a catalyst and 0.1% by weight of triphenyl phosphite as a heat stabilizer were added, then the temperature was raised to 180 °C to melt them, and stirring was performed for 1 hour. Subsequently, a polycarbonate copolymer was prepared by raising the temperature to 200 °C and performing primary polymerization under a reduced pressure of 0.1 bar, increasing the temperature stepwise to 250 °C and further reducing the pressure to 0.0013 bar to perform secondary polymerization. The physical properties of the prepared polycarbonate copolymer specimen were evaluated by the following methods, and the results are shown in Table 1 below.

### Example 2

A polycarbonate copolymer was prepared in the same manner as in Example 1, except that 20 mol% of 1,4-butanediol as a primary dihydroxyl compound and 70 mol% of isosorbide and 10 mol% of 2,2-bis(4-hydroxycyclohexyl)propane as secondary dihydroxyl compounds were used. The physical properties of the prepared polycarbonate copolymer specimen were evaluated by the following methods, and the results are shown in Table 1 below.

### Example 3

A polycarbonate copolymer was prepared in the same manner as in Example 1, except that 35 mol% of 1,4-butanediol as a primary dihydroxyl compound and 50 mol% of isosorbide and 15 mol% of 2,2-bis(4-hydroxycyclohexyl)propane as secondary dihydroxyl compounds were used. The physical properties of the prepared polycarbonate copolymer specimen were evaluated by the following methods, and the results are shown in Table 1 below.

### Comparative Example 1

A polycarbonate copolymer was prepared in the same manner as in Example 1, except that 20 mol% of 1,4-butanediol as a primary dihydroxyl compound and 80 mol% of isosorbide as a secondary dihydroxyl compound were used. The physical properties of the prepared polycarbonate copolymer specimen were evaluated by the following methods, and the results are shown in Table 1 below.

### Comparative Example 2

A polycarbonate copolymer was prepared in the same manner as in Example 1, except that a primary dihydroxyl compound was not used and 80 mol% of isosorbide and 20 mol% of 2,2-bis(4-hydroxycyclohexyl)propane were used as secondary dihydroxyl compounds. The physical properties of the prepared polycarbonate copolymer specimen were evaluated by the following methods, and the results are shown in Table 1 below.

### Comparative Example 3

A polycarbonate copolymer was prepared in the same manner as in Example 1, except that a primary dihydroxyl compound was not used and 100 mol% of isosorbide as a secondary dihydroxyl compound was used. The physical properties of the prepared polycarbonate copolymer specimen were evaluated by the following methods, and the results are shown in Table 1 below.

### Measurement methods of physical properties

(1) Evaluation of scratch resistance: A pencil hardness of a specimen was evaluated through a pencil hardness test (ISO 15184).
(2) Glass transition temperature (Tg, unit: °C): A glass transition temperature (Tg) was measured at a transition point obtained when, in accordance with ISO 11357, 10 mg of the sample was maintained at 220 °C for 1 minute at a heating rate of 10 °C per minute using a differential scanning calorimeter (DSC) and then cooled at a cooling rate of 10 °C per minute, and the temperature was raised to 220 °C at the same heating rate.
(3) Dynamic viscosity (unit: cps = mPa.s): A dynamic viscosity of a solution in which 0.5 g of the polycarbonate copolymer sample was dissolved in a mixed solvent of 14.5 g of hexafluoroisopropanol and dichloromethane was measured using a Brookfield dynamic viscometer (DV-II+Pro viscometer) at 25 °C.

**[Table 1]**

| Classification | Dihydroxyl compounds (mol%) | | | Pencil hardness | Glass transition temperature (°C) | Dynamic viscosity (cps) |
|---|---|---|---|---|---|---|
| | 1,4-butanediol | isosorbide | 2,2-bis(4-hydroxycyclohexyl)propane | | | |
| Example 1 | 10 | 80 | 10 | 3H | 153 | 9.89 |
| Example 2 | 20 | 70 | 10 | 2H | 120 | 9.36 |
| Example 3 | 35 | 50 | 15 | H | 105 | 9.12 |
| Comparative Example 1 | 20 | 80 | 0 | F | 118 | 9.43 |
| Comparative Example 2 | 0 | 80 | 20 | Not measurable | 157 | 9.18 |
| Comparative Example 3 | 0 | 100 | 0 | Not measurable | 160 | 9.36 |

From the above results, it can be seen that polycarbonate copolymers (Examples 1 to 3) of the present invention are multicomponent copolymers obtained by necessarily copolymerizing the primary dihydroxyl compound and at least two secondary dihydroxyl compounds as the dihydroxyl compounds, wherein the polycarbonate copolymer can solve a scratch resistance deterioration problem in the case of using one secondary dihydroxyl compound as in Comparative Example 1, and a brittleness problem (pencil hardness cannot be measured and scratch resistance is reduced) in the case of applying only secondary dihydroxyl compounds as in Comparative Examples 2 and 3, and can improve heat resistance (glass transition temperature) and scratch resistance at the same time. In addition, it was confirmed that the polycarbonate copolymer of the present invention has excellent formability (dynamic viscosity), light resistance, weather resistance, transparency, mechanical strength, and the like.

## Claims

1. A polycarbonate copolymer comprising:
a unit derived from at least one primary dihydroxyl compound; and
units derived from at least two secondary dihydroxyl compounds,
wherein the polycarbonate copolymer comprises the following based on the units derived from an entire dihydroxyl:
about 5 to about 45 mol% of a unit derived from a primary dihydroxyl compound;
about 45 to about 85 mol% of a unit derived from a secondary dihydroxyl compound represented by Formula 4a; and
about 1 to about 30 mol% of a unit derived from a secondary dihydroxyl compound represented by Formula 4b:
[Formula 4a] HO-R₇-OH
in Formula 4a, R₇ is a substituted or unsubstituted cycloalkylene group having 4 to 20 carbon atoms or a substituted or unsubstituted cycloalkoxylene group having 4 to 20 carbon atoms;
[Formula 4b] HO-R₄-R₅-R₆⁻OH
in Formula 4b, R₄ and R₆ are each independently a cycloalkylene group or a cycloalkoxylene group having 4 to 10 carbon atoms, and R₅ is a linear or branched alkylene group having 1 to 10 carbon atoms,
wherein the polycarbonate copolymer has a pencil hardness higher than H as measured according to a pencil hardness test (ISO 15184) and a glass transition temperature (Tg) of about 90 to about 160 °C as measured according to ISO 11357.

2. A polycarbonate copolymer comprising:
about 5 to about 45 mol% of at least one first repeating unit represented by Formula 1 below; and
about 5 to about 95 mol% of at least two second repeating units represented by Formula 2 below: 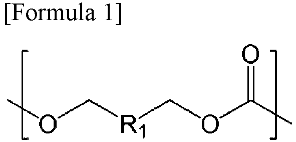
in Formula 1, R₁ is a single bond, a substituted or unsubstituted alkylene group having 1 to 20 carbon atoms, a substituted or unsubstituted alkoxylene group having 2 to 20 carbon atoms, a substituted or unsubstituted cycloalkylene group having 4 to 20 carbon atoms, or a substituted or unsubstituted cycloalkoxylene group having 4 to 20 carbon atoms; 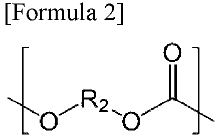
in Formula 2, R₂ is a substituted or unsubstituted cycloalkylene group having 4 to 20 carbon atoms or a substituted or unsubstituted cycloalkoxylene group having 4 to 20 carbon atoms,
wherein the polycarbonate copolymer comprises:
about 45 to about 85 mol% of a second repeating unit represented by Formula 2a below; and
about 1 to about 30 mol% of a second repeating unit represented by Formula 2b below: 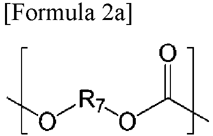
in Formula 2a, R₇ is a substituted or unsubstituted cycloalkylene group having 4 to 20 carbon atoms or a substituted or unsubstituted cycloalkoxylene group having 4 to 20 carbon atoms; 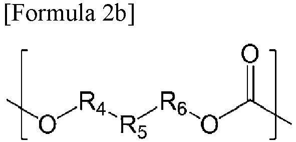
in Formula 2b, R₄ and R₆ are each independently a cycloalkylene group or a cycloalkoxylene group having 4 to 10 carbon atoms, and R₅ is a linear or branched alkylene group having 1 to 10 carbon atoms.

3. The polycarbonate copolymer of claim 2, wherein the first repeating unit is derived from a primary dihydroxyl compound including one or more of ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,15-pentadecanediol, 1,16-hexadecanediol, triethylene glycol, tetraethylene glycol, pentaethylene glycol, hexaethylene glycol, heptaethylene glycol, octaethylene glycol, nonaethylene glycol, decaethylene glycol, undecaethylene glycol, dodecaethylene glycol, 1,2-cyclohexanedimethanol, 1,3-cyclohexanedimethanol, 1,4-cyclohexanedimethanol, tricyclodecane dimethanol, pentacyclopentadecane dimethanol, decalindimethanol, tricyclotetradecane dimethanol, norbomandimethanol, adamantane dimethanol, 3,9-bis(1,1-dimethyl-2-hydroxyethyl)-2,4,8,10-tetraoxaspiro[5.5]undecane, and bicyclo[2.2.2]octane-2,3-dimethanol, and at least one carbonate diester compound.

4. The polycarbonate copolymer of claim 2, wherein the second repeating unit is derived from a secondary dihydroxyl compound including two or more of 1,4:3,6-dianhydrohexitol, 1,2-cyclohexanediol, 1,3-cyclohexanediol, 1,4-cyclohexanediol, 2-methyl-1,4-cyclohexanediol, tricyclodecanediol, pentacyclopentadecanediol, decalindiol, tricyclotetradecanediol, norbonanediol, adamantanediol, 2,2-bis(4-hydroxycyclohexyl)propane, and 2,2,4,4-tetramethyl-1,3-cyclobutanediol, and at least one carbonate diester compound.

5. The polycarbonate copolymer of claim 2, further comprising a third repeating unit derived from at least one tertiary dihydroxyl compound and at least one carbonate diester compound.

6. The polycarbonate copolymer of claim 2,
wherein the polycarbonate copolymer has a pencil hardness higher than H as measured according to a pencil hardness test (ISO 15184); and
the polycarbonate copolymer has a glass transition temperature (Tg) of about 90 to about 160 °C at a transition point obtained when, in accordance with ISO 11357, 10 mg of a sample is maintained at 220 °C for 1 minute at a heating rate of 10 °C per minute and then cooled at a cooling rate of 10 °C per minute, and the temperature is raised to 220 °C at the same heating rate.

7. The polycarbonate copolymer of claim 2, wherein a solution in which 0.5 g of a sample is dissolved in a mixed solvent of 14.5 g of hexafluoroisopropanol and dichloromethane has a dynamic viscosity of about about 8.5 to about 16 mPa.s (about 8.5 to about 16 cps) as measured using a Brookfield dynamic viscometer at 25 °C.

8. A method of preparing a polycarbonate copolymer, comprising:
melting a dihydroxyl compound including about 5 to about 45 mol% of at least one primary dihydroxyl compound represented by Formula 3 below and about 5 to about 95 mol% of at least two secondary dihydroxyl compounds represented by Formula 4 below, and at least one carbonate diester compound to obtain a melt; and
performing polycondensation of the melt in the presence of a catalyst: 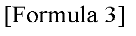 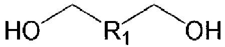
in Formula 3, R₁ is a single bond, a substituted or unsubstituted alkylene group having 1 to 20 carbon atoms, a substituted or unsubstituted alkoxylene group having 2 to 20 carbon atoms, a substituted or unsubstituted cycloalkylene group having 4 to 20 carbon atoms, or a substituted or unsubstituted cycloalkoxylene group having 4 to 20 carbon atoms;
[Formula 4] HO-R₂-OH
in Formula 4, R₂ is a substituted or unsubstituted cycloalkylene group having 4 to 20 carbon atoms or a substituted or unsubstituted cycloalkoxylene group having 4 to 20 carbon atoms,
wherein the dihydroxyl compound includes:
about 45 to about 85 mol% of a secondary dihydroxyl compound represented by Formula 4a; and
about 1 to about 30 mol% of a secondary dihydroxyl compound represented by Formula 4b:
[Formula 4a] HO-R₇-OH
in Formula 4a, R₇ is a substituted or unsubstituted cycloalkylene group having 4 to 20 carbon atoms or a substituted or unsubstituted cycloalkoxylene group having 4 to 20 carbon atoms;
[Formula 4b] HO-R₄-R₅-R₆⁻OH
in Formula 4b, R₄ and R₆ are each independently a cycloalkylene group or a cycloalkoxylene group having 4 to 10 carbon atoms, and R₅ is a linear or branched alkylene group having 1 to 10 carbon atoms.

9. The method of claim 8, wherein the dihydroxyl compound further includes at least one tertiary dihydroxyl compound, and the tertiary dihydroxyl compound includes one or more of 1,1'-bis(4-hydroxyphenyl)-3,3,5-trimethylcyclohexane, bis(4-hydroxyphenyl)cyclohexane, and bis(4-hydroxyphenyl)cyclopentane.

10. The method of claim 8, wherein the carbonate diester compound includes one or more of diphenyl carbonate, ditolyl carbonate, dimethyl carbonate, diethyl carbonate, and di-t-butyl carbonate.

11. A composition comprising the polycarbonate copolymer according to any one of claims 1 to 7.

## Patentansprüche

1. Polycarbonat-Copolymer, umfassend:
eine Einheit, die von mindestens einer primären Dihydroxyverbindung abgeleitet ist; und
Einheiten, die von mindestens zwei sekundären Dihydroxyverbindungen abgeleitet sind,
wobei das Polycarbonat-Copolymer, bezogen auf die von einer gesamten Dihydroxyverbindung abgeleiteten Einheiten, Folgendes umfasst:
etwa 5 bis etwa 45 Mol-% einer Einheit, die von einer primären Dihydroxyverbindung abgeleitet ist;
etwa 45 bis etwa 85 Mol-% einer Einheit, die von einer durch Formel 4a dargestellten sekundären Dihydroxyverbindung abgeleitet ist; und
etwa 1 bis etwa 30 Mol-% einer Einheit, die von einer durch Formel 4b dargestellten sekundären Dihydroxyverbindung abgeleitet ist:
[Formel 4a] HO—R₇-OH
in Formel 4a ist R₇ eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen;
[Formel 4b] HO—R₄-R₅-R₆-OH
in Formel 4b sind R₄ und R₆ jeweils unabhängig voneinander eine Cycloalkylengruppe oder eine Cycloalkoxylengruppe mit 4 bis 10 Kohlenstoffatomen, und R₅ ist eine lineare oder verzweigte Alkylengruppe mit 1 bis 10 Kohlenstoffatomen,
wobei das Polycarbonat-Copolymer eine gemäß einem Bleistifthärtetest (ISO 15184) gemessene Bleistifthärte von höher als H und eine gemäß ISO 11357 gemessene Glasübergangstemperatur (Tg) von etwa 90 bis etwa 160 °C aufweist.

2. Polycarbonat-Copolymer, umfassend:
etwa 5 bis etwa 45 Mol-% mindestens einer ersten Wiederholungseinheit, die durch die nachstehende Formel 1 dargestellt ist; und
etwa 5 bis etwa 95 Mol-% mindestens zwei zweiter Wiederholungseinheiten, die durch die nachstehende Formel 2 dargestellt sind: 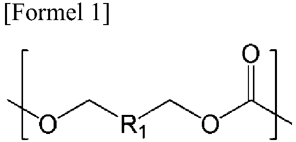
in Formel 1 ist R₁ eine Einfachbindung, eine substituierte oder unsubstituierte Alkylengruppe mit 1 bis 20 Kohlenstoffatomen, eine substituierte oder unsubstituierte Alkoxylengruppe mit 2 bis 20 Kohlenstoffatomen, eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen; 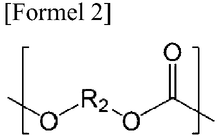
in Formel 2 ist R₂ eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen,
wobei das Polycarbonat-Copolymer umfasst:
etwa 45 bis etwa 85 Mol-% einer durch die nachstehende Formel 2a dargestellten zweiten Wiederholungseinheit; und
etwa 1 bis etwa 30 Mol-% einer durch die nachstehende Formel 2b dargestellten zweiten Wiederholungseinheit: 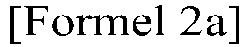 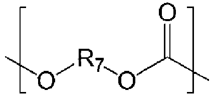
in Formel 2a ist R₇ eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen; 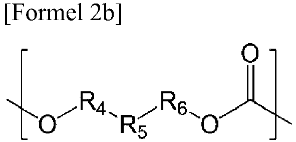
in Formel 2b sind R₄ und R₆ jeweils unabhängig voneinander eine Cycloalkylengruppe oder eine Cycloalkoxylengruppe mit 4 bis 10 Kohlenstoffatomen, und R₅ ist eine lineare oder verzweigte Alkylengruppe mit 1 bis 10 Kohlenstoffatomen.

3. Polycarbonat-Copolymer nach Anspruch 2, wobei die erste Wiederholungseinheit von einer primären Dihydroxyverbindung, die eines oder mehrere von Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,13-Tridecandiol, 1,14-Tetradecandiol, 1,15-Pentadecandiol, 1,16-Hexadecandiol, Triethylenglykol, Tetraethylenglykol, Pentaethylenglykol, Hexaethylenglykol, Heptaethylenglykol, Octaethylenglykol, Nonaethylenglykol, Decaethylenglykol, Undecaethylenglykol, Dodecaethylenglykol, 1,2-Cyclohexandimethanol, 1,3-Cyclohexandimethanol, 1,4-Cyclohexandimethanol, Tricyclodecandimethanol, Pentacyclopentadecandimethanol, Decalindimethanol, Tricyclotetradecandimethanol, Norbornandimethanol, Adamantandimethanol, 3,9-Bis(1,1-dimethyl-2-hydroxyethyl)-2,4,8,10-tetraoxaspiro[5.5]undecan und Bicyclo[2.2.2]octan-2,3-dimethanol umfasst, und mindestens einer Kohlensäurediesterverbindung abgeleitet ist.

4. Polycarbonat-Copolymer nach Anspruch 2, wobei die zweite Wiederholungseinheit von einer sekundären Dihydroxyverbindung, die zwei oder mehr von 1,4:3,6-Dianhydrohexitol, 1,2-Cyclohexandiol, 1,3-Cyclohexandiol, 1,4-Cyclohexandiol, 2-Methyl-1,4-cyclohexandiol, Tricyclodecandiol, Pentacyclopentadecandiol, Decalindiol, Tricyclotetradecandiol, Norbornandiol, Adamantandiol, 2,2-Bis(4-hydroxycyclohexyl)propan und 2,2,4,4-Tetramethyl-1,3-cyclobutandiol umfasst, und mindestens einer Kohlensäurediesterverbindung abgeleitet ist.

5. Polycarbonat-Copolymer nach Anspruch 2, ferner umfassend eine dritte Wiederholungseinheit, die von mindestens einer tertiären Dihydroxyverbindung und mindestens einer Kohlensäurediesterverbindung abgeleitet ist.

6. Polycarbonat-Copolymer nach Anspruch 2, wobei das Polycarbonat-Copolymer eine gemäß einem Bleistifthärtetest (ISO 15184) gemessene Bleistifthärte von höher als H aufweist; und
das Polycarbonat-Copolymer eine Glasübergangstemperatur (Tg) von etwa 90 bis etwa 160 °C an einem Übergangspunkt aufweist, der erhalten wird, wenn gemäß ISO 11357 10 mg einer Probe 1 Minute lang bei 220 °C mit einer Heizrate von 10 °C pro Minute gehalten und dann mit einer Kühlrate von 10 °C pro Minute abgekühlt werden und die Temperatur mit derselben Heizrate auf 220 °C erhöht wird.

7. Polycarbonat-Copolymer nach Anspruch 2, wobei eine Lösung, in der 0,5 g einer Probe in einem Mischlösungsmittel aus 14,5 g Hexafluorisopropanol und Dichlormethan gelöst sind, eine dynamische Viskosität von etwa 8,5 bis etwa 16 mPa·s (etwa 8,5 bis etwa 16 cps) aufweist, gemessen mit einem dynamischen Brookfield-Viskosimeter bei 25 °C.

8. Verfahren zur Herstellung eines Polycarbonat-Copolymers, umfassend:
Schmelzen einer Dihydroxyverbindung, die etwa 5 bis etwa 45 Mol-% mindestens einer durch die nachstehende Formel 3 dargestellten primären Dihydroxyverbindung und etwa 5 bis etwa 95 Mol-% mindestens zwei durch die nachstehende Formel 4 dargestellter sekundärer Dihydroxyverbindungen umfasst, und mindestens einer Kohlensäurediesterverbindung, um eine Schmelze zu erhalten; und
Durchführen einer Polykondensation der Schmelze in Gegenwart eines Katalysators: 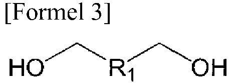
in Formel 3 ist R₁ eine Einfachbindung, eine substituierte oder unsubstituierte Alkylengruppe mit 1 bis 20 Kohlenstoffatomen, eine substituierte oder unsubstituierte Alkoxylengruppe mit 2 bis 20 Kohlenstoffatomen, eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen;
[Formel 4] HO-R₂-OH
in Formel 4 ist R₂ eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen,
wobei die Dihydroxyverbindung umfasst:
etwa 45 bis etwa 85 Mol-% einer durch Formel 4a dargestellten sekundären Dihydroxyverbindung; und
etwa 1 bis etwa 30 Mol-% einer durch Formel 4b dargestellten sekundären Dihydroxyverbindung:
[Formel 4a] HO-R₇-OH
in Formel 4a ist R₇ eine substituierte oder unsubstituierte Cycloalkylengruppe mit 4 bis 20 Kohlenstoffatomen oder eine substituierte oder unsubstituierte Cycloalkoxylengruppe mit 4 bis 20 Kohlenstoffatomen;
[Formel 4b] HO-R₄-R₅₋R₆-OH
in Formel 4b sind R₄ und R₆ jeweils unabhängig voneinander eine Cycloalkylengruppe oder eine Cycloalkoxylengruppe mit 4 bis 10 Kohlenstoffatomen, und R₅ ist eine lineare oder verzweigte Alkylengruppe mit 1 bis 10 Kohlenstoffatomen.

9. Verfahren nach Anspruch 8, wobei die Dihydroxyverbindung ferner mindestens eine tertiäre Dihydroxyverbindung umfasst, und die tertiäre Dihydroxyverbindung eines oder mehrere von 1,1'-Bis(4-hydroxyphenyl)-3,3,5-trimethylcyclohexan, Bis(4-hydroxyphenyl)cyclohexan und Bis(4-hydroxyphenyl)cyclopentan umfasst.

10. Verfahren nach Anspruch 8, wobei die Kohlensäurediesterverbindung eines oder mehrere von Diphenylcarbonat, Ditolylcarbonat, Dimethylcarbonat, Diethylcarbonat und Di-t-butylcarbonat umfasst.

11. Zusammensetzung, umfassend das Polycarbonat-Copolymer nach einem der Ansprüche 1 bis 7.

## Revendications

1. Un copolymère de polycarbonate comprenant :
une unité dérivée d'au moins un composé dihydroxylé primaire ; et
des unités dérivées d'au moins deux composés dihydroxylés secondaires,
dans lequel le copolymère de polycarbonate comprend, sur la base des unités dérivées de l'ensemble des composés dihydroxylés :
environ 5 à environ 45 % mol d'une unité dérivée d'un composé dihydroxylé primaire ;
environ 45 à environ 85 % mol d'une unité dérivée d'un composé dihydroxylé secondaire représenté par la Formule 4a ; et
environ 1 à environ 30 % mol d'une unité dérivée d'un composé dihydroxylé secondaire représenté par la Formule 4b :
[Formule 4a] HO-R₇-OH
dans la Formule 4a, R₇ est un groupe cycloalkylène substitué ou non substitué ayant 4 à 20 atomes de carbone ou un groupe cycloalkoxylène substitué ou non substitué ayant 4 à 20 atomes de carbone ;
[Formule 4b] HO-R₄-R₅-R₆-OH
dans la Formule 4b, R₄ et R₆ sont chacun indépendamment un groupe cycloalkylène ou un groupe cycloalkoxylène ayant 4 à 10 atomes de carbone, et R₅ est un groupe alkylène linéaire ou ramifié ayant 1 à 10 atomes de carbone,
dans lequel le copolymère de polycarbonate présente une dureté au crayon supérieure à H, mesurée selon un essai de dureté au crayon (ISO 15184), et une température de transition vitreuse (Tg) d'environ 90 à environ 160 °C, mesurée selon l'ISO 11357.

2. Un copolymère de polycarbonate comprenant :
environ 5 à environ 45 % mol d'au moins une première unité répétitive représentée par la Formule 1 ci-dessous ; et
environ 5 à environ 95 % mol d'au moins deux deuxièmes unités répétitives représentées par la Formule 2 ci-dessous : 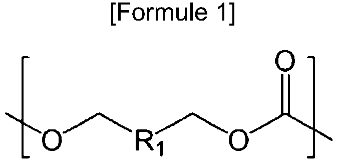
dans la Formule 1, R₁ est une liaison simple, un groupe alkylène substitué ou non substitué ayant 1 à 20 atomes de carbone, un groupe alkoxylène substitué ou non substitué ayant 2 à 20 atomes de carbone, un groupe cycloalkylène substitué ou non substitué ayant 4 à 20 atomes de carbone, ou un groupe cycloalkoxylène substitué ou non substitué ayant 4 à 20 atomes de carbone ; 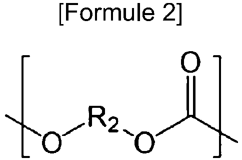
dans la Formule 2, R₂ est un groupe cycloalkylène substitué ou non substitué ayant 4 à 20 atomes de carbone ou un groupe cycloalkoxylène substitué ou non substitué ayant 4 à 20 atomes de carbone,
dans lequel le copolymère de polycarbonate comprend :
environ 45 à environ 85 % mol d'une deuxième unité répétitive représentée par la Formule 2a ci-dessous ; et
environ 1 à environ 30 % mol d'une deuxième unité répétitive représentée par la Formule 2b ci-dessous : 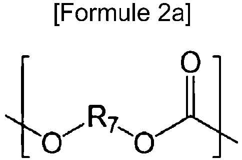
dans la Formule 2a, R₇ est un groupe cycloalkylène substitué ou non substitué ayant 4 à 20 atomes de carbone ou un groupe cycloalkoxylène substitué ou non substitué ayant 4 à 20 atomes de carbone ; 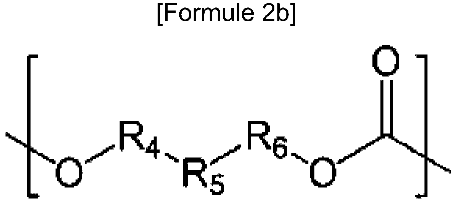
dans la Formule 2b, R₄ et R₆ sont chacun indépendamment un groupe cycloalkylène ou un groupe cycloalkoxylène ayant 4 à 10 atomes de carbone, et R₅ est un groupe alkylène linéaire ou ramifié ayant 1 à 10 atomes de carbone.

3. Le copolymère de polycarbonate selon la revendication 2, dans lequel la première unité répétitive est dérivée d'un composé dihydroxylé primaire comprenant un ou plusieurs composés choisis parmi l'éthylène glycol, le 1,3-propanediol, le 1,4-butanediol, le 1,5-pentanediol, le 1,6-hexanediol, le 1,7-heptanediol, le 1,8-octanediol, le 1,9-nonanediol, le 1,10-decanediol, le 1,11-undecanediol, le 1,12-dodécanediol, le 1,13-tridécanediol, le 1,14-tétradécanediol, le 1,15-pentadécanediol, le 1,16-hexadécanediol, le triéthylène glycol, le tétraéthylène glycol, le pentaéthylène glycol, le hexaéthylène glycol, le heptaéthylène glycol, l'octaéthylène glycol, le nonaéthylène glycol, le décaéthylène glycol, l'undécaéthylène glycol, le dodécaéthylène glycol, le 1,2-cyclohexanediméthanol, le 1,3-cyclohexanediméthanol, le 1,4-cyclohexanediméthanol, le diméthanol de tricyclodécane, le diméthanol de pentacyclopentadécane, le décalindiméthanol, le diméthanol de tricyclotétradécane, le norbornandiméthanol, le diméthanol d'adamantane, le 3,9-bis(1,1-diméthyl-2-hydroxyéthyl)-2,4,8,10-tétraoxaspiro[5.5]undécane, et le bicyclo[2.2.2]octane-2,3-diméthanol, ainsi que d'au moins un composé diester de carbonate.

4. Le copolymère de polycarbonate selon la revendication 2, dans lequel la deuxième unité répétitive est dérivée d'un composé dihydroxylé secondaire comprenant deux ou plusieurs composés choisis parmi le 1,4:3,6-dianhydrohexitol, le 1,2-cyclohexanediol, le 1,3-cyclohexanediol, le 1,4-cyclohexanediol, le 2-méthyl-1,4-cyclohexanediol, le tricyclodécanediol, le pentacyclopentadécanediol, le décalindiol, le tricyclotétradécanediol, le norbornanediol, l'adamantanediol, le 2,2-bis(4-hydroxycyclohexyl)propane, et le 2,2,4,4-tétraméthyl-1,3-cyclobutanediol, ainsi que d'au moins un composé diester de carbonate.

5. Le copolymère de polycarbonate selon la revendication 2, comprenant en outre une troisième unité répétitive dérivée d'au moins un composé dihydroxylé tertiaire et d'au moins un composé diester de carbonate.

6. Le copolymère de polycarbonate selon la revendication 2,
dans lequel le copolymère de polycarbonate présente une dureté au crayon supérieure à H, mesurée selon un essai de dureté au crayon (ISO 15184) ; et
le copolymère de polycarbonate présente une température de transition vitreuse (Tg) d'environ 90 à environ 160 °C à un point de transition obtenu lorsque, conformément à l'ISO 11357, 10 mg d'un échantillon sont maintenus à 220 °C pendant 1 minute à une vitesse de chauffage de 10 °C par minute, puis refroidis à une vitesse de refroidissement de 10 °C par minute, et que la température est portée à 220 °C à la même vitesse de chauffage.

7. Le copolymère de polycarbonate selon la revendication 2, dans lequel une solution dans laquelle 0,5 g d'un échantillon est dissous dans un solvant mixte de 14,5 g d'hexafluoroisopropanol et de dichlorométhane présente une viscosité dynamique d'environ 8,5 à environ 16 mPa.s (d'environ 8,5 à environ 16 cps), mesurée à l'aide d'un viscosimètre dynamique Brookfield à 25 °C.

8. Procédé de préparation d'un copolymère de polycarbonate, comprenant :
faire fondre un composé dihydroxylé comprenant environ 5 à environ 45 % mol d'au moins un composé dihydroxylé primaire représenté par la Formule 3 ci-dessous et environ 5 à environ 95 % mol d'au moins deux composés dihydroxylés secondaires représentés par la Formule 4 ci-dessous, ainsi qu'au moins un composé diester de carbonate, pour obtenir une masse fondue ; et
effectuer une polycondensation de la masse fondue en présence d'un catalyseur : 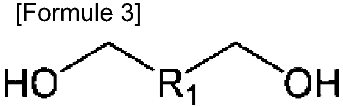
dans la Formule 3, R₁ est une liaison simple, un groupe alkylène substitué ou non substitué ayant 1 à 20 atomes de carbone, un groupe alkoxylène substitué ou non substitué ayant 2 à 20 atomes de carbone, un groupe cycloalkylène substitué ou non substitué ayant 4 à 20 atomes de carbone, ou un groupe cycloalkoxylène substitué ou non substitué ayant 4 à 20 atomes de carbone ;
[Formule 4] HO-R₂-OH
dans la Formule 4, R₂ est un groupe cycloalkylène substitué ou non substitué ayant 4 à 20 atomes de carbone ou un groupe cycloalkoxylène substitué ou non substitué ayant 4 à 20 atomes de carbone,
dans lequel le composé dihydroxylé comprend :
environ 45 à environ 85 % mol d'un composé dihydroxylé secondaire représenté par la Formule 4a ; et
environ 1 à environ 30 % mol d'un composé dihydroxylé secondaire représenté par la Formule 4b :
[Formule 4a] HO-R₇-OH
dans la Formule 4a, R₇ est un groupe cycloalkylène substitué ou non substitué ayant 4 à 20 atomes de carbone ou un groupe cycloalkoxylène substitué ou non substitué ayant 4 à 20 atomes de carbone ;
[Formule 4b] HO-R₄-R₅-R₆-OH
dans la Formule 4b, R₄ et R₆ sont chacun indépendamment un groupe cycloalkylène ou un groupe cycloalkoxylène ayant 4 à 10 atomes de carbone, et R₅ est un groupe alkylène linéaire ou ramifié ayant 1 à 10 atomes de carbone.

9. Le procédé selon la revendication 8, dans lequel le composé dihydroxylé comprend en outre au moins un composé dihydroxylé tertiaire, et le composé dihydroxylé tertiaire comprend un ou plusieurs composés choisis parmi le 1,1'-bis(4-hydroxyphényl)-3,3,5-triméthylcyclohexane, le bis(4-hydroxyphényl)cyclohexane, et le bis(4-hydroxyphényl)cyclopentane.

10. Le procédé selon la revendication 8, dans lequel le composé diester de carbonate comprend un ou plusieurs composés choisis parmi le carbonate de diphényle, le carbonate de ditolyle, le carbonate de diméthyle, le carbonate de diéthyle, et le carbonate de di-t-butyle.

11. Une composition comprenant le copolymère de polycarbonate selon l'une quelconque des revendications 1 à 7.
